# EUROPEAN PATENT APPLICATION

(11) **EP 4 717 914 A1**
(43) Date of publication of application: **01.04.2026**
(21) Application number: 24203163.1
(22) Date of filing: 27.09.2024
(51) Int. Cl.: F04B 7/00, F04B 49/06, F04B 39/08, F04B 39/10, F04B 49/22, B60H 1/00, F16K 15/16, F16K 15/18, F25B 31/02

(54) **ACTIVE DISCHARGE VALVE FOR COMPRESSORS**

(71) Applicant: ZF Friedrichshafen AG, 88046 Friedrichshafen (DE)
(72) Inventor: Diesch, Markus, 88348 Bierstetten (DE); Guldenschuh, Dominik, 79115 Freiburg (DE); Heitz, Uwe, 88677 Markdorf (DE); Trevisi, Marco, 88046 Friedrichshafen (DE)
(74) Representative: ZF Friedrichshafen AG

(57) **Abstract**

A compressor-discharge valve (5) for a controlled discharge of a fluid from a compressor (21), particularly a compressor (21) for a thermal management system, the compressor-discharge valve (5) comprising: an outlet closure element (56) configured to open and/or close an outlet (52) of the compressor-discharge valve (5), and an actuator element (57), configured and arranged to adjust the outlet closure element (56) depending on a desired operation point of the compressor (21).

## Description

### FIELD OF THE INVENTION

The present invention relates to a compressor-discharge valve for a controlled discharge of a fluid from a compressor, such compressor, a thermal management system, particularly for a vehicle, particularly an electro- or hybrid vehicle, such vehicle, and a method for managing thermal loads in a vehicle, particularly an electro- or hybrid vehicle.

### BACKGROUND OF THE INVENTION

In modern thermal management systems, particularly those used in automotive applications, the efficiency and reliability of compressors are critical. Traditional compressor-discharge valves often lack the flexibility to adapt to varying operating conditions, leading to suboptimal performance and potential backflow issues.

Current discharge valve units are typically designed as simple reed valves, usually configured as "normally closed." The design of these valves, and consequently their spring stiffness, is often a compromise between different operating points, especially in non-stationary compressors. This compromise can lead to backflow into the compression unit at various operating points, causing efficiency losses.

Thereby limitations of standard climate control systems exist, which typically operate at one or two specific compressor operating points. In such cases, the valve is more or less precisely designed for one certain opening pressure. However, every time the valve closes when it should be building pressure, backpressure occurs in the compressor, or it closes too late, causing suction back into the compressor chamber during the intake stroke. Therefore, traditional systems are designed for a single operating point.

Modern heat pumps, as employed in thermal management systems of electric- or hybrid cars, particularly, however, are designed to operate across multiple operating points, pressure levels, and temperatures. This variability necessitates a compromise in valve design, leading to suboptimal performance at certain edge operating points. Existing designs use passive outlet valves with constant spring properties (pre-tension and stiffness), typically in the form of reed valves. These passive valves can only prevent backflow under a limited set of conditions.

### SUMMARY OF THE INVENTION

It is thus an objective to overcome the aforementioned problems and to provide an improved compressor or thermal management system compared to the prior art.

It is a further object of the present invention to provide compressor-discharge valve capable of adapting to various compressor operation points.

These and other problems are solved by the subject matter of the attached independent claims.

Preferred embodiments may be taken from the dependent claims, and, beyond that, from the following description, in particular comprising various embodiments as covered and described in the annexed claims.

The skilled person will understand that any embodiment described in the following description is covered and comprised by the subject matter covered by the annexed claims.

The embodiments, features and combination of features as described herein in connection with the invention, as well as the combination of features as given in the annexed claims, but also any combination of features as mentioned and described in connection with the embodiments shall be considered as being disclosed herein, at least, however, shall be considered to be derivable by the skilled person.

In particular, each feature and each combination of features in the embodiments as described herein may for example be claimed in a different combination, in particular different claim category, at least because the skilled person will recognize that each and every combination of the features mentioned herein is suitable for contributing to solving the underlying problem.

Further, each feature and each combination of features in the claims and used in the description below may be used and claimed independently from the respective claimed subject matter, independently from claim dependencies and back-references, and independently from the claim category in which the feature is claimed. For example, in an arbitrary combination selected from one or more claims, one or more embodiments as set forth herein below and/or from the annexed figures may be envisaged.

The above-described problems are advantageously solved in a first aspect by a compressor-discharge valve according to the present invention. Such compressor-discharge valve is particularly suitable for a controlled discharge of a fluid from a compressor, particularly a compressor for a thermal management system. Such compressor-discharge valve comprises an outlet closure element configured to open and/or close an outlet of the compressor-discharge valve, and an actuator element, configured and arranged to adjust the outlet closure element depending on a desired operation point of the compressor.

The term "operation point" as used herein, preferably refers to a required mass flow rate at a required high-pressure level/compression ratio.

Thereby, the outlet closure element is configured to open and/or close the outlet of the compressor-discharge valve, and particularly, the outlet of the compressor-discharge valve is moved to an open position and release fluid when a predetermined pressure difference between a first pressure on an inlet side of the compressor-discharge valve and a second pressure on an outlet side of the compressor-discharge valve is exceeded, and, vice versa, to close the outlet of the compressor-discharge valve to a closed position and seal against fluid flow when the predetermined pressure difference is undershot.

As the actuator element adjusts the outlet closure element depending on a desired operation point of the compressor it is thus possible to adapt the desired predetermined pressure difference to the operation point of the compressor. Thereby a compressor-discharge valve is achieved, with valve characteristics that can be adjusted by the active actuator element, allowing for optimized settings at different operating points of the compressor. This flexibility ensures that the system can adapt to varying conditions, enhancing overall performance. By implementing such adjustable valve characteristics at the high-pressure outlet, the compressor's efficiency is significantly improved. This also helps to prevent backflow into the compression unit, such as in scroll compressors, which is particularly beneficial in automotive heat pump applications.

The above-described problems are advantageously solved in a second aspect by a thermal management system according to the present invention. This thermal management system is particularly useful, when employed in a vehicle, particularly an electro- or hybrid vehicle.

The inventive thermal management system comprises a first refrigerant circuit, which comprising a cooling device, particularly a heat pump system having at least one compressor, a first heat exchange means, particularly an evaporator, optionally a second heat exchange means, particularly a condenser, and optionally, an expansion valve.

A thermal management system is defined as a system that regulates the temperature of at least two consumers. A consumer is therefore a device that needs to be cooled or heated. One consumer can be for cooling and another for heating. These consumers can even be part of a single cooling circuit, as will be further illustrated below.

Preferably, a consumer can be an electric machine. Furthermore, a consumer can be an inverter. Additionally or alternatively, a consumer can be a passenger compartment. Advantageously, a consumer can be a battery. In the scope of the present invention, a consumer may particularly also be an electrical consumer of the e-axle system, such as electric motor and power electronics of the e-axle, or the like.

In the present invention, tempering is understood to mean cooling or heating.

The thermal management system comprises at least one refrigerant circuit and optionally at least one coolant circuit. In this case, at least one cooling device is arranged in the refrigerant circuit. This cools the refrigerant. The coolant circuit is tempered by the refrigerant and is in direct connection with at least one consumer.

Furthermore, the thermal management system can comprise at least one, in particular exactly two, coolant circuits and one refrigerant circuit. In this case, at least one cooling device is arranged in the refrigerant circuit. The refrigerant is tempered by the cooling device. The coolant circuits are tempered by the refrigerant and are in direct connection with the consumers.

Preferably, one of the coolant circuits can be provided as a high-temperature circuit and the other coolant circuit as a low-temperature circuit. The high-temperature circuit is thermally connected to the refrigerant circuit at a first point and the low-temperature circuit at a second point. The first point has a higher temperature than the second point. In particular, the high-temperature circuit can be connected downstream of a compressor. Preferably, the low-temperature circuit can be connected downstream of an expansion valve.

The temperature to which the high-temperature circuit is tempered, particularly cooled, can be, for example, 40°C. This temperature can be used simultaneously for heating a consumer such as the passenger compartment and for cooling another consumer such as an electric machine.

The low-temperature circuit is tempered to a lower temperature than the high-temperature circuit. This allows the cooling capacity to be concentrated on the low-temperature circuit, to which the largest consumer in terms of cooling capacity, e.g., power electronics, is connected. This optimizes the provision of cooling capacity and allows, for example, the compressor to be smaller.

A radiator can preferably be arranged in the low-temperature circuit.

Advantageously, a passenger compartment and/or an electric machine and/or a battery can be arranged as consumers in the high-temperature circuit. Furthermore, a power electronics arrangement, in particular, an inverter, can be arranged in the low-temperature circuit.

In this case, the cooling device can be designed as a heat pump. The heat pump comprises at least one, preferably two, heat exchangers and at least one compressor. One of the heat exchangers can be designed as a condenser and the other heat exchanger as an evaporator.

Preferably, the refrigerant in the refrigerant circuit is a natural refrigerant, in particular propane. Furthermore, the coolant in the coolant circuits can be a refrigerant with a low boiling point and vapor pressure, such as a water-glycol mixture.

Preferably, the thermal management system comprises a distribution unit. The distribution unit can be used to control which circuit is connected to which circuit and to which consumer. The distribution unit is also referred to as a Fluid Control Unit (FCU). Advantageously, the distribution unit comprises a valve unit with at least one valve. The valve can be designed as a slide valve, in particular an axial slide valve or a rotary slide valve. In particular, the valve unit can comprise at least four, preferably exactly four, valves.

The distribution unit can comprise at least two housing parts. Channel structures and/or valve receiving areas can be formed on the adjacent sides of the housing parts. Alternatively, one housing part can be designed as a cover without structures, and only one housing part can have channel structures and/or valve receiving areas. It is also conceivable to provide valve receiving areas exclusively in one housing part and channel structures exclusively in the other housing part.

Furthermore, the thermal management system comprises a pump arrangement with at least one pump. Preferably, the pump arrangement can comprise at least two, in particular exactly two, pumps. At least one pump can be designed as a gerotor pump. At least one pump can be designed as a vane pump.

Alternatively, the thermal management system can also be arranged stationary, e.g., in a building.

In the thermal management system according to the present invention, particularly for a vehicle, particularly an electro- or hybrid vehicle, the system further comprises a compressor-discharge valve according to the first aspect of the present invention.

This is of particularly advantage, as the adjustable nature of the valve allows it to perform optimally across a wide range of operating points of the compressor. This flexibility ensures that the compressor maintains high efficiency, even as the vehicle's operating environment changes. This is especially important for electric and hybrid vehicles, which often face dynamic and varying conditions. Further a significant reduction in backflow into the compression unit is achieved. By adjusting the valve settings in real-time based on the current operating conditions, the system minimizes backflow, preventing efficiency losses and enhancing overall performance. By preventing backflow and optimizing compressor performance, the thermal management system according to the present invention reduces unnecessary energy consumption, which leads to significant energy savings, which is particularly important for electric and hybrid vehicles where energy efficiency is paramount.

The above problems are also advantageously overcome in a third aspect of the present invention by a vehicle, particularly electric or hybrid vehicle, comprising a thermal management system according to the present invention. With this regard, the integration of the thermal management system according to the present invention in a vehicle, particularly an electric or hybrid vehicle, offers significant technical advantages, including enhanced energy efficiency, improved reliability and performance of the compressor, reduced backflow and associated efficiency losses, and the ability to adapt to a wide range of operating conditions and temperatures. This results in a more robust and efficient thermal management system, ultimately contributing to the overall performance and longevity of the vehicle.

The above problems are also advantageously overcome in a fourth aspect of the present invention by a compressor, particularly a compressor for a thermal management system according to the present invention, comprising a compressor-discharge valve according to the present invention.

The above problems are also advantageously overcome in a fifth aspect of the present invention by a method for managing thermal loads in a vehicle, particularly an electro- or hybrid vehicle, preferably with a thermal management system according to the present invention.

The method of the present invention thereby comprises at least the following steps of:
- a step a) of determining an operation point of the compressor of a thermal management system;
- a step b) of deriving a desired primary spring function of the outlet spring of a compressor-discharge valve from the operation point of step a);
- a step c) of actuating an active element of the compressor-discharge valve to adjust the primary spring function of the outlet spring to the desired primary spring function of step b), wherein
   preferably the primary spring function is selected from the group comprising pre-tension and/or stiffness of the outlet spring, wherein the compressor-discharge valve (5), preferably is a compressor-discharge valve of any one of the present invention.

Advantageously a step a) of determining an operation point of the compressor may also comprise measuring of at least one operation parameter of the compressor. Such operation parameter may be selected from the group comprising pressure, particularly inlet pressure and/or outlet pressure, fluid temperature and compressor speed.

With the inventive method the compressor discharge valve according to the present invention can be controlled using standard control technology. The vehicle may incorporates pressure and temperature sensors to monitor the conditions within the thermal management system, and particularly the compressor. Specifically, the inlet and outlet pressures at the compressor are either measured directly or are known from system parameters. Accordingly the operation parameters of the compressor may be directly measured, particularly in a control loop or the system can utilize a lookup table, to determine the optimal settings for the valve. The lookup table provides predefined settings based on various combinations of operation parameters, such as pressure, temperature, and compressor speed, ensuring that the valve operates efficiently under different conditions. Alternatively, a control loop can dynamically adjust the valve settings in real-time, continuously optimizing performance based on the current operating conditions.

Accordingly, with the inventive method it is ensured that the valve responds accurately to changes in the system, maintaining optimal performance and efficiency. By leveraging precise sensor data and advanced control algorithms, the system can effectively manage the thermal conditions, enhancing the overall efficiency and reliability of the compressor and the thermal management system as a whole and at a variety of operation points.

It shall be noted, that the steps given above do not necessarily have to be carried out in the given order. The provided steps may be carried out in any other suitable order.

However, the order as given above may apply for particular variants of the method.

It will be immediately acknowledged by a person skilled in the art that a feature, embodiment, effect or advantage described herein in connection with the inventive thermal management system, may also be a feature, embodiment, effect or advantage of the inventive method, respectively, and vice versa.

Within the present application, terms such as "lateral" or "laterally", "rear", "frontal", "upper", "lower", "bottom", "opposite", "inner", "outer" or the like, as used herein, which de-scribe the position of a first object relative to another object, preferably refer to the relative position of a respective part or object with regard to its position fully mounted for its intended use.

In an advantageous embodiment of the inventive compressor-discharge valve and/or the inventive method said the actuator element controls the outlet closure element depending on a rotational angle of the actuator element.

This is of particular advantage, in that it allows for precise and dynamic control of the outlet closure element based on the rotational angle of the actuator element. By leveraging the rotational angle, the system can finely adjust the position of the outlet closure element, ensuring optimal performance across a wide range of operating points of the compressor. This precise control helps to maintain the desired pressure levels within the compressor, thereby enhancing the overall efficiency and reliability of the thermal management system. Additionally, this feature minimizes the risk of backflow into the compression unit, which can occur at various operating points, further improving the compressor's performance and longevity. The ability to adjust the valve settings in real-time based on the rotational angle also allows for better adaptation to changing conditions, making the system more versatile and robust.

In a further advantageous embodiment of the inventive compressor-discharge valve and/or the inventive method said the outlet closure element is an outlet spring, and wherein the actuator element is configured and arranged to adjust a primary spring function of the outlet spring, preferably the primary spring function is selected from the group comprising pre-tension and/or stiffness of the outlet spring.

By configuring the actuator element to adjust and thus precisely control the outlet spring's primary functions, such as pre-tension and stiffness parameters, the system can dynamically optimize the valve's performance to suit varying operating points. This flexibility ensures that the valve can maintain optimal pressure levels and prevent backflow into the compression unit, thereby enhancing the overall efficiency and reliability of the compressor.

In a further advantageous embodiment of the inventive compressor-discharge valve and/or the inventive method said outlet closure element is an outlet spring, particularly a reed or leaf spring.

This is of particular advantage, in that using an outlet spring, especially a reed or leaf spring, provides a reliable and responsive mechanism for fluid discharge control. These springs are durable and can be precisely engineered for optimal performance, ensuring efficient pressure management and preventing backflow. Their simplicity and compact design also make them cost-effective and easy to integrate into various systems, enhancing the overall efficiency and reliability of the thermal management system.

In a further advantageous embodiment of the inventive compressor-discharge valve and/or the inventive method said actuator element is an electric or electromagnetic actuator element, particularly a proportional solenoid, a proportional rotary solenoid, a linear actuator, a linear stepper motor or a stepper motor with rotational movement.

This is of particular advantage, in that using an electric or electromagnetic actuator element, such as a proportional solenoid, proportional rotary solenoid, linear actuator, linear stepper motor, or stepper motor with rotational movement, allows for precise and responsive control of the valve. These actuators can adjust the valve settings in real-time based on the system's operating conditions, ensuring optimal performance and efficiency. Their ability to provide fine-tuned adjustments enhances the system's adaptability to varying pressures and temperatures, improving overall reliability and reducing the risk of backflow. Additionally, electric or electromagnetic actuators are known for their durability and low maintenance, contributing to the long-term stability and cost-effectiveness of the thermal management system.

Preferably the spring element is designed as an NO (normally open) and is closed by an electric or electromagnetic actuator, such as a proportional solenoid, with a defined variable force. Depending on the applied force, the opening characteristic of the valve changes accordingly.

In a further advantageous embodiment of the inventive compressor-discharge valve and/or the inventive method said actuator element comprises an electric or electromagnetic actuator element, such as an electric magnetic drive, a magnetic coil, a shape memory wire, a piezo element, hydraulic pressure, or other active elements.

These actuators can dynamically adjust the valve settings in real-time based on the system's operating points, ensuring optimal performance and efficiency. Their versatility in providing fine-tuned adjustments enhances the system's ability to adapt to varying pressures and temperatures, thereby improving overall reliability and reducing the risk of backflow.

The valve element is attracted by the applied magnetic field. By changing the magnetic strength, the applied force changes, and thus the corresponding spring force with which the high-pressure outlet is closed. The active element can be, in addition to an electric magnetic drive, for example, a shape memory wire, a piezo element, hydraulic pressure, or other active elements. Particularly, in some embodiments, the outlet closure element may be arranged and adjusted without mechanical contact with the actuator element, but with a magnetic force, for example a magnetic coil above or below the outlet closure element.

Thereby, the outlet closure element is preferably arranged on the low-pressure side outside the compressor.

In a further advantageous embodiment of the inventive compressor-discharge valve and/or the inventive method said the active element comprises a cam, preferably a moveable cam, a slidably mounted cam or a rotatably mounted cam.

Such cam may be particularly useful in that the cam can adjust the primary spring function of the outlet closure element with high accuracy, enabling fine-tuned adjustments to the valve's opening and closing characteristics. This precision enhances the system's ability to maintain optimal pressure levels and prevent backflow, thereby improving the overall efficiency and reliability of the compressor. Additionally, cams are robust and durable components, which contribute to the long-term stability and low maintenance requirements of the thermal management system.

In a further advantageous embodiment of the inventive compressor-discharge valve and/or the inventive method said the active element comprises an electric or electromagnetic actuator element, particularly a proportional solenoid, a linear actuator or a linear stepper motor, and a cam, particularly a rotatably mounted cam, and wherein the electric or electromagnetic actuator element is configured and arranged to cause a rotational movement of the cam to adjust the primary spring function of the outlet spring, preferably the stiffness of the outlet spring.

This is of particular advantage, in that combining an electric or electromagnetic actuator element, such as a proportional solenoid, linear actuator, or linear stepper motor, with a cam, particularly a rotatably mounted cam, allows for precise and dynamic adjustment of the primary spring function of the outlet spring, especially its stiffness. The actuator element can induce rotational movement of the cam, which in turn adjusts the spring characteristics with high accuracy. This precise control over the spring stiffness enables the valve to maintain optimal pressure levels and prevent backflow into the compression unit, thereby enhancing the overall efficiency and reliability of the compressor.

In a further advantageous embodiment of the inventive compressor-discharge valve and/or the inventive method said active element comprises cam, preferably a slidably mounted cam, and an electric or electromagnetic actuator element, particularly a proportional solenoid, a linear actuator or a linear stepper motor, and wherein the electric or electromagnetic actuator element is configured and arranged to cause a longitudinal movement of the cam to adjust the primary spring function of the outlet spring, preferably the pre-tension and/or the stiffness of the outlet spring.

This particularly allows for precise longitudinal movement of the cam that enables fine-tuned adjustments to the primary spring function of the outlet spring, specifically its pre-tension and/or stiffness. By dynamically adjusting these spring characteristics, the valve can maintain optimal pressure levels and prevent backflow into the compression unit, thereby enhancing the overall efficiency and reliability of the compressor.

In a further advantageous embodiment of the inventive compressor-discharge valve and/or the inventive method said active element comprises a cam, preferably a rotatably mounted cam, and an electric or electromagnetic actuator element, preferably a proportional rotary solenoid or stepper motor with rotational movement, and wherein the electric or electromagnetic actuator element is configured and arranged to cause a rotational movement of the cam to adjust the primary spring function of the outlet spring (56), preferably the pre-tension and/or the stiffness of the outlet spring.

This is of particular advantage, in that combining a rotatably mounted cam with an electric or electromagnetic actuator element, such as a proportional rotary solenoid or stepper motor with rotational movement, allows for precise and dynamic adjustment of the primary spring function of the outlet spring, specifically its pre-tension and/or stiffness. The actuator element induces rotational movement of the cam, which in turn finely tunes the spring characteristics.

In a further advantageous embodiment of the inventive compressor-discharge valve and/or the inventive method said active element comprises a lift limiter, particularly an elastically mounted lift limiter and an electric or electromagnetic actuator element, particularly a proportional linear solenoid or stepper motor, and wherein the electric or electromagnetic actuator element is configured and arranged to cause a tilting of the lift limiter to adjust the primary spring function of the outlet spring, preferably the pre-tension and/or the stiffness of the outlet spring.

This is of particular advantage, in that incorporating a lift limiter, especially an elastically mounted lift limiter, along with an electric or electromagnetic actuator element, such as a proportional linear solenoid or stepper motor, allows for precise tilting adjustments of the lift limiter. This tilting action enables fine-tuned control over the primary spring function of the outlet spring, specifically its pre-tension and/or stiffness.

### Brief Description of the Figures

The present invention will be described in further detail with reference to the drawings from which further features, embodiments and advantages may be taken, and in which:
Fig. 1 shows a schematical flow diagram of a thermal management system of the prior art;
Fig. 2 shows three schematic action principles according to embodiments of the present invention;
Fig. 3 shows schematic representations of compressor-discharge valves according to the present invention.

### Detailed Description of the Figures

The features of the present invention disclosed in the specification, the claims, examples and/or the figures may both separately and in any combination thereof be material for realizing the invention in various forms thereof.

In the embodiments shown in the figures, elements similar or identic in function are designated with like reference signs. It is noted, that the figures may not be true to scale with respect to each other.

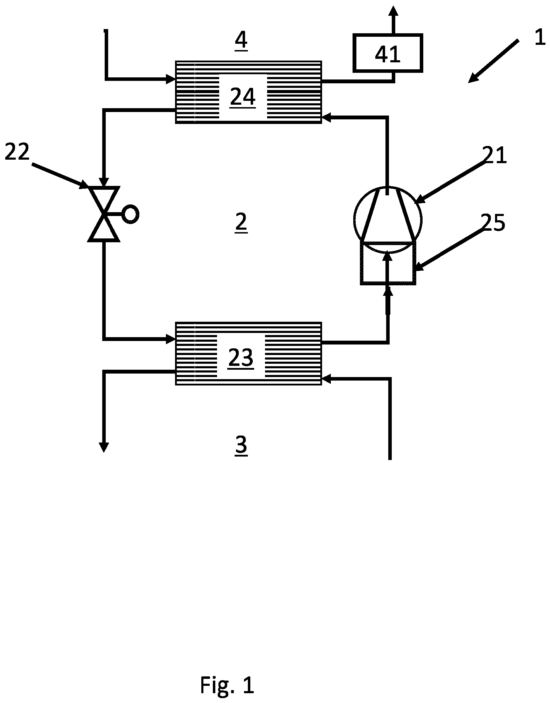

Fig. 1 shows a thermal management system according to the prior art, which may particularly employed in standard combustion vehicles. Such thermal management system usually comprises a refrigerant circuit 2 with a cooling device 1, such as a heat pump system 1 in the present case. The heat pump 1 functions by compressing the refrigerant using the compressor 21, which increases the refrigerant's pressure and temperature. The compressor 21, here is driven by an electric machine 25. The heated refrigerant then flows through a second heat exchange means 24, particularly a condenser 24, where it releases heat to the high temperature circuit 4 and condenses into a liquid. Next, the liquid refrigerant passes through an expansion valve 22, where it undergoes a pressure drop and cools down significantly. The cooled refrigerant then enters a first heat exchange means 23, particularly an evaporator 23, where it absorbs heat from the low temperature circuit 3, causing it to evaporate and complete the cycle.

This means, in this example, there are two coolant circuits 3 and 4. The first coolant circuit 3, which is the low temperature circuit 3, particularly a cooling water circuit, allows coolant to flow through the evaporator 23. This circuit 3 is responsible for that the refrigerant in the cycle 2 is absorbing heat from the refrigerant in the low temperature circuit 3, thereby cooling the refrigerant in cycle 2, which thus can cool the consumers connected to this circuit 3. The second coolant circuit 4, which is a high temperature circuit 4, allows coolant to flow through the condenser 24. This circuit is designed to feed the heat of the refrigerant in the cycle 2 into the high temperature circuit 4 and thus warm and heat consumers connected to the high temperature circuit 4. In the present case, the high temperature circuit 4 may comprise an additional heater 41, e.g. a PTC heater 41.

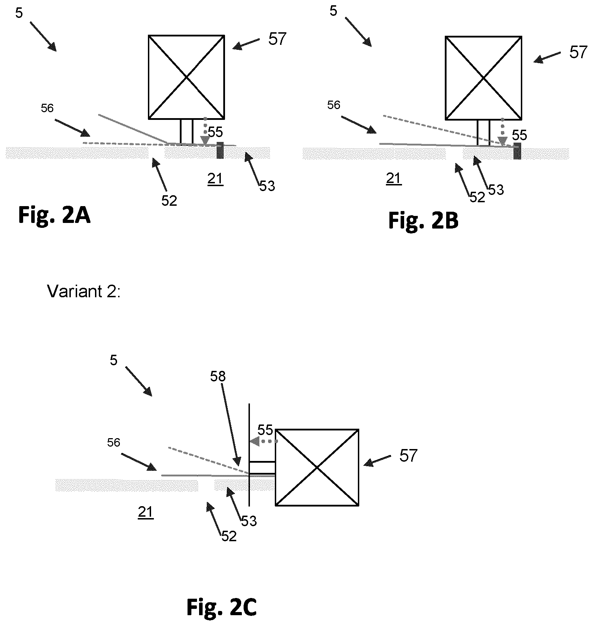

Fig. 2 shows three schematic action principles according to embodiments of the present invention. Thereby, the compressor-discharge valve 5 is provided for a controlled discharge of a fluid from a compressor 21, which may particularly be a compressor 21 for a thermal management system such as shown in Fig. 1. The compressor-discharge valve 5 comprises according to the invention an outlet closure element 56 configured to open and/or close the valve orifice or valve outlet 52 of the compressor-discharge valve 5. In Fig. 2A, 2B and 2C the outlet closure element 56 is shown in two configurations (dotted line and solid line), which represent the closed or open state, respectively. Thereby, Fig. 2A shows an embodiment of the inventive valve 5 in an "normally open" configuration, while Fig. 2B shows an embodiment of the inventive valve 5 in an "normally closed" configuration.

An actuator element 57 is provided, which is configured and arranged to adjust the outlet closure element 56 depending on a desired operation point of the compressor 21.

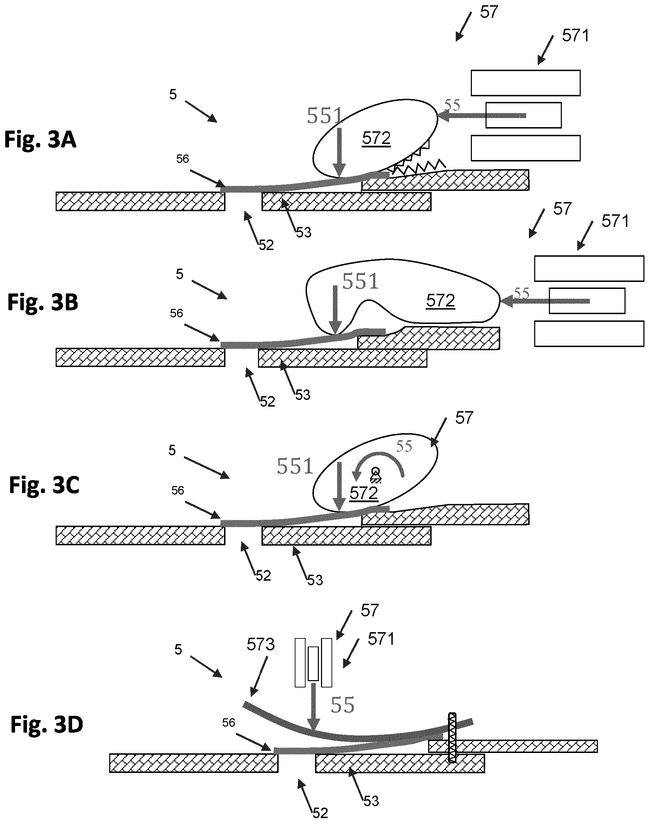

In all shown embodiments in Fig 2 or Fig 3 the outlet closure element 56 is an outlet spring 56, and the actuator element 57 is configured and arranged to adjust a primary spring function of the outlet spring 56, for example, the pre-tension and/or stiffness of the outlet spring 56. Particularly, the outlet spring 56 may be provided in the form of a reed or leaf spring 56.

Particularly, the actuator element 57 may be an electric or electromagnetic actuator element 57, particularly a proportional solenoid, a proportional rotary solenoid, a linear actuator, a linear stepper motor or a stepper motor with rotational movement. In Fig. 2A, 2B the actuator element 57 is provided as proportional solenoid 57. In Fig. 2 C, the actuator element 57 is provided as a linear actuator 57.

In Fig. 2A the spring element 56 is designed as NO (normally open) and is closed by an electric or electromagnetic actuator (proportional solenoid) with a defined variable force. Depending on the applied force, the opening characteristic of the valve changes accordingly. In Fig. 2A, the outlet closure element 56 is by the force 55 onto the valve seat 53. Thereby, the stiffness of the leaf spring 56 remains constant, however the pre-tension can be adjusted depending on the force 55 applied by the actuator 57. The same principle is applied in Fig. 2B, however, here in a normally closed configuration.

In Fig. 2C, the actuator 57 is a linear actuator 57, such as an electric or electromagnetic linear actuator, that is arranged to adjust the pivot point 58 of the spring 56, thereby modifying its stiffness, however not the pre-tension.

Turning now to Fig. 3, the embodiments shown in Fig. 3A, 3B and 3C also have an active element 57, however additionally comprise a cam 572, preferably a moveable cam, a slidably mounted cam or a rotatably mounted cam. In such configurations the compressor-discharge valve 5 according to the present invention realizes a semi-active outlet valve for a compressor 21. Here the outlet closure element 56 is designed as a reed valve spring element, whose spring properties, particularly pre-tension and stiffness, are adjusted using a movable cam 572 that presses on the reed valve 56, thereby adjusting the pre-tension and changing the clamping length, thereby adjusting the stiffness.

As can be particularly seen from the embodiment depicted in Fig. 3A the inventive compressor-discharge valve 5 may comprise an active element 57, which comprises an electric or electromagnetic actuator element 571, particularly a proportional solenoid, a linear actuator or a linear stepper motor, and a cam 572, particularly a rotatably mounted cam. The electric or electromagnetic actuator element 571 is configured and arranged to cause a rotational movement of the cam 572 to adjust the primary spring function of the outlet spring 56, preferably the stiffness of the outlet spring 56.

Particularly, the proportional linear solenoid or linear stepper motor 571 causes the rotation of a rotatably mounted cam 572, which, through its movement, changes the pre-tension and clamping length, thus the spring stiffness, of the reed valve 56. While force 55 of the electric or electromagnetic actuator element 571 acts on the cam 572, the cam 572 exploits force 551 on the outlet closure element 56.

As can be particularly seen from the embodiment depicted in Fig. 3B, the compressor-discharge valve 5 may comprise an active element 57, which comprises a cam 572, preferably a slidably mounted cam 572, and an electric or electromagnetic actuator element 571, particularly a proportional solenoid, a linear actuator or a linear stepper motor. The electric or electromagnetic actuator element 571 is configured and arranged to cause a longitudinal movement of the cam 572 to adjust the primary spring function of the outlet spring 56, preferably the pre-tension and/or the stiffness of the outlet spring 56. Particularly, the proportional linear solenoid or linear actuator 571 causes the displacement of a slidably mounted cam 572 which, through its movement, changes the pre-tension and clamping length, thus the spring stiffness, of the reed valve 56. Particularly, the proportional linear solenoid or linear stepper motor 571 causes the rotation of a rotatably mounted cam 572, which, through its movement, changes the pre-tension and clamping length, thus the spring stiffness, of the reed valve 56. While force 55 of the electric or electromagnetic actuator element 571 acts on the cam 572, the cam 572 exploits force 551 on the outlet closure element 56.

As can be particularly seen from the embodiment depicted in Fig. 3C the active element 57 comprises a cam 572, preferably a rotatably mounted cam, and an electric or electromagnetic actuator element 571, preferably a proportional rotary solenoid or stepper motor with rotational movement. The electric or electromagnetic actuator element 571 is configured and arranged to cause a rotational movement of the cam 572 to adjust the primary spring function of the outlet spring 56, preferably the pre-tension and/or the stiffness of the outlet spring 56.

Particularly the proportional rotary solenoid or stepper motor 57 with rotational movement causes the rotation of a rotatably mounted cam 572, which, through its movement, changes the pre-tension and clamping length, thus the spring stiffness, of the reed valve 56.

Particularly, the proportional linear solenoid or linear stepper motor 571 (not shown in Fig. 3C) causes the rotation of a rotatably mounted cam 572 with rotational force 55, while the cam 572 exploits force 551 on the outlet closure element 56.

In the embodiment shown in Fig. 3D the active element 57 comprises an electric or electromagnetic actuator element 571, particularly a proportional linear solenoid or stepper motor, and a lift limiter 573, particularly an elastically mounted lift limiter.

The electric or electromagnetic actuator element 571 is configured and arranged to cause a tilting of the lift limiter 573 in that it exploits force 55 on he limiter 573. This adjusts the primary spring function of the outlet spring 56, preferably the pre-tension and/or the stiffness of the outlet spring 56.

Particularly through the movement of the elastically mounted lift limiter 573, the pre-tension and clamping length, thus spring stiffness, of the reed valve 56 is changed. The force causes the rolling of the pre-curved lift limiter 573 and thus simultaneously changes the clamping length, thus spring stiffness, and pre-tension of outlet closure element 56.

The embodiments in the figures may relate to preferred embodiments, while all elements and features described in connection with embodiments may be used, as far as appropriate, in combination with any other embodiment and feature as discussed herein, in particular related to any other embodiment discussed further above.

### List of Reference Numerals

- 1:: cooling system, heat pump system
- 2:: first refrigerant circle
- 21:: compressor
- 22:: expansion valve
- 23:: first heat exchange means, evaporator
- 24:: second heat exchange means, condenser
- 25:: electric machine
- 3:: low temperature circuit, first coolant circuit
- 4:: high temperature circuit, second coolant circuit
- 41:: PTC heater
- 5:: compressor-discharge valve
- 51:: inlet, high pressure side
- 52:: outlet, orifice, low pressure side
- 53:: valve seat
- 55:: force, stroke
- 551:: cam force
- 56:: outlet closure element
- 57:: actuator element
- 571:: electric or electromagnetic actuator element
- 572:: cam
- 573:: lift limiter
- 58:: pivot point

## Claims

1. A compressor-discharge valve (5) for a controlled discharge of a fluid from a compressor (21), particularly a compressor (21) for a thermal management system, the compressor-discharge valve (5) comprising:
an outlet closure element (56) configured to open and/or close an outlet (52) of the compressor-discharge valve (5), and
an actuator element (57), configured and arranged to adjust the outlet closure element (56) depending on a desired operation point of the compressor (21).
The compressor-discharge valve (5) according to claim 1, wherein the actuator element (57) controls the outlet closure element (56) depending on a rotational angle of the actuator element (57).

2. The compressor-discharge valve (5) according to claim 1, wherein the outlet closure element (56) is an outlet spring (56), and wherein the actuator element (57) is configured and arranged to adjust a primary spring function of the outlet spring (56), preferably the primary spring function is selected from the group comprising pre-tension and/or stiffness of the outlet spring (56).

3. The compressor-discharge valve (5) according to any one of claims 1 or 2, wherein the outlet closure element (56) is an outlet spring (56), particularly a reed or leaf spring (56).

4. The compressor-discharge valve (5) according to any one of the preceding claims, wherein the actuator element (57) is an electric or electromagnetic actuator element (57), particularly a proportional solenoid, a proportional rotary solenoid, a linear actuator, a linear stepper motor or a stepper motor with rotational movement.

5. The compressor-discharge valve (5) according to any one of the preceding claims, wherein the actuator element (57) comprises an electric or electromagnetic actuator element (571), such as an electric magnetic drive, a magnetic coil, a shape memory wire, a piezo element, hydraulic pressure, or other active elements.

6. The compressor-discharge valve (5) according to any one of the preceding claims, wherein the active element (57) comprises a cam (572), preferably a moveable cam, a slidably mounted cam or a rotatably mounted cam.

7. The compressor-discharge valve (5) according to any one of the preceding claims, wherein the active element (57) comprises an electric or electromagnetic actuator element (571), particularly a proportional solenoid, a linear actuator or a linear stepper motor, and a cam (572), particularly a rotatably mounted cam, and wherein the electric or electromagnetic actuator element (571) is configured and arranged to cause a rotational movement of the cam (572) to adjust the primary spring function of the outlet spring (56), preferably the stiffness of the outlet spring (56).

8. The compressor-discharge valve (5) according to any one of the preceding claims, wherein the active element (57) comprises cam (572), preferably a slidably mounted cam (572), and an electric or electromagnetic actuator element (571), particularly a proportional solenoid, a linear actuator or a linear stepper motor, and wherein the electric or electromagnetic actuator element (571) is configured and arranged to cause a longitudinal movement of the cam (572) to adjust the primary spring function of the outlet spring (56), preferably the pre-tension and/or the stiffness of the outlet spring (56).

9. The compressor-discharge valve (5) according to any one of the preceding claims, wherein the active element (57) comprises a cam (572), preferably a rotatably mounted cam, and an electric or electromagnetic actuator element (571), preferably a proportional rotary solenoid or stepper motor with rotational movement, and wherein the electric or electromagnetic actuator element (571) is configured and arranged to cause a rotational movement of the cam (572) to adjust the primary spring function of the outlet spring (56), preferably the pre-tension and/or the stiffness of the outlet spring (56).

10. The compressor-discharge valve (5) according to any one of the preceding claims, wherein the active element (57) comprises a lift limiter (573), particularly an elastically mounted lift limiter and an electric or electromagnetic actuator element (571), particularly a proportional linear solenoid or stepper motor, and wherein the electric or electromagnetic actuator element (571) is configured and arranged to cause a tilting of the lift limiter (573) to adjust the primary spring function of the outlet spring (56), preferably the pre-tension and/or the stiffness of the outlet spring (56).

11. A thermal management system, particularly for a vehicle, particularly an electro- or hybrid vehicle, comprising:
a first refrigerant circuit (2), which comprising a cooling device (1), particularly a heat pump system (1) with
o at least one compressor (21),
o a first heat exchange means (23), particularly an evaporator (23),
o optionally a second heat exchange means (24), particularly a condenser (24),
o optionally, an expansion valve (22),
optionally, a first coolant circuit, which is a low temperature circuit (3), in particular a cooling water circuit, which flows through the first heat exchange means (23), particularly the evaporator (23),
optionally, a second coolant circuit, which is a high temperature circuit (4), which flows through the second heat exchange means (24), particularly the compressor (21), and
further comprising a compressor-discharge valve according to any of the preceding claims.

12. A compressor (21), particularly for a thermal management system, preferably for a thermal management system according to claim 11, comprising a compressor-discharge valve (5) according to any one of claims 1 to 10.

13. A vehicle, particularly electric or hybrid vehicle, comprising compressor-discharge valve according to any one of claims 1 to 10 and/or a thermal management system according to claim 11 and/or a compressor (21) according to claim 12.

14. A method for managing thermal loads in a vehicle, particularly an electro- or hybrid vehicle, preferably with a thermal management system according to claim 11, the method comprising:
- a step a) of determining an operation point of the compressor (21) of a thermal management system;
- a step b) of deriving a desired primary spring function of the outlet spring (56) of a compressor-discharge valve (5) from the operation point of step a);
- a step c) of actuating an active element (57) of the compressor-discharge valve (5) to adjust the primary spring function of the outlet spring (56) to the desired primary spring function of step b), wherein
preferably the primary spring function is selected from the group comprising pre-tension and/or stiffness of the outlet spring (56), wherein the compressor-discharge valve (5), preferably is a compressor-discharge valve (5) of any one of claims 1 to 10.

15. The method for managing thermal loads in a vehicle according to claim 14, wherein
a step a) of determining an operation point of the compressor (21) comprises measuring at least one operation parameter of the compressor (21), the operation parameter selected from the group comprising pressure, particularly inlet pressure and/or outlet pressure, fluid temperature and compressor speed.
